# FASCICULE DE BREVET EUROPEEN

(11) **EP 0 920 685 B1**
(45) Date de publication et mention de la délivrance du brevet: **28.11.2001**
(21) Numéro de dépôt: 97936723.2
(22) Date de dépôt: 31.07.1997
(51) Int. Cl.: G07F 7/10

(54) **CARTE A CIRCUIT INTEGRE COMPORTANT DES FICHIERS CLASSES SELON UNE ARBORESCENCE**
CHIPKARTE MIT GEMÄSS EINER BAUMARTIGEN STRUKTUR GESPEICHERTEN DATEIEN
INTEGRATED CIRCUIT CARD COMPRISING FILES CLASSIFIED IN A TREE STRUCTURE

(30) Priorité: 01.08.1996 FR 9609728
(43) Date de publication de la demande: 09.06.1999
(73) Titulaire: SCHLUMBERGER Systèmes, 92120 Montrouge (FR)
(72) Inventeur: THIRIET, Fabien, F-45100 Orléans (FR)
(74) Mandataire: Fruchard, Guy
(86) Numéro de dépôt international: FR9701435
(87) Numéro de publication internationale: WO9806071

(56) Documents cités:
- EP-A- 0 583 006
- EP-A- 0 617 387
- WO-A-94/00822
- FRENGER P: "MCard/FS: a file manager for memory cards" IMAGES OF THE TWENTY-FIRST CENTURY. PROCEEDINGS OF THE ANNUAL INTERNATIONAL CONFERENCE OF THE IEEE ENGINEERING IN MEDICINE AND BIOLOGY SOCIETY (CAT. NO.89CH2770-6), SEATTLE, WA, USA, 9-12 NOV. 1989, 1989, NEW YORK, NY, USA, IEEE, USA, pages 777-778 vol.2, XP002029716

## Description

La présente invention concerne une carte à circuit intégré comportant une mémoire contenant des fichiers classés selon une arborescence.

Pour des raisons de protocole de communication et de commodité d'utilisation, les fichiers d'une mémoire de carte à circuit intégré sont classés dans des répertoires répartis selon une arborescence de différents niveaux. A un fichier donné correspond ainsi un chemin d'accès dans l'arborescence.

Actuellement, l'arborescence est physique dans la mémoire de la carte : les répertoires dans lesquels sont stockés les différents fichiers sont physiquement créés dans la mémoire et sont physiquement imbriqués les uns dans les autres conformément à l'arborescence créée par l'utilisateur.

Ce mode de stockage des fichiers avec arborescence physique présente deux inconvénients principaux. D'une part il est coûteux en espace mémoire, car les répertoires de l'arborescence ont une existence physique dans la mémoire et les informations d'en-tête qu'ils contiennent (identificateur, taille, pointeur, etc...) occupent des espaces de mémoire qui ne peuvent être utilisés pour le stockage des fichiers. D'autre part, les opérations d'ajout, de suppression, d'extension, ou de réduction de fichier nécessitent une modification physique de l'arborescence dans la mémoire. Cette modification suppose une mise à jour dynamique des pointeurs de chaînage de l'arborescence. Cette mise à jour est à l'origine non seulement d'une perte de temps mais également d'une insécurité en cas d'arrachage de la carte pendant la mise à jour, le système d'exploitation risquant alors de ne plus être en mesure de retrouver une arborescence cohérente dans la mémoire de la carte.

Selon l'invention, on propose une carte à circuit intégré comportant une mémoire contenant des fichiers classés selon une arborescence de différents niveaux, chaque fichier ayant un chemin d'accès associé, dans laquelle chaque fichier est physiquement implanté dans la mémoire de façon indépendante de son emplacement dans l'arborescence et contient une indication du chemin d'accès complet associé à ce fichier.

Ainsi la mémoire de la carte ne présente plus d'arborescence physique. Toutefois le chemin d'accès contenu dans chaque fichier permet de reconstituer, a posteriori, l'arborescence de classement des différents fichiers pour des nécessités de protocole de communication ou de commodité d'utilisation.

L'absence d'arborescence physique facilite et sécurise les opérations d'ajouts, de suppressions, d'extensions ou de réductions de fichiers. Par exemple, l'ajout d'un fichier s'effectue par une simple inscription du fichier dans la mémoire à la suite des fichiers déjà existants ou dans l'un quelconque des blocs mémoire disponibles. De même, la suppression d'un fichier n'implique pas nécessairement un déplacement des fichiers existants. En cas d'arrachage de la carte au cours de ces différentes opérations, le chemin d'accès de chaque fichier ne sera aucunement endommagé et le système d'exploitation sera en mesure d'accéder à nouveau aux différents fichiers sans difficulté particulière, seul le fichier en cours de modification au moment de l'arrachage risquant d'être affecté.

Avantageusement, chaque fichier contient une indication du niveau de son emplacement dans l'arborescence. Ainsi, lorsque le système d'exploitation recherche un fichier de niveau donné, il est possible d'examiner le chemin d'accès des seuls fichiers dont le niveau est égal au niveau du fichier recherché. La recherche du fichier est donc accélérée.

D'autres caractéristiques et avantages de l'invention apparaîtront à la lecture de la description qui suit d'un exemple de mise en oeuvre de l'invention.

Il sera fait référence aux dessins annexés, parmi lesquels :
- la figure 1 est un schéma illustrant une mémoire dans laquelle les fichiers sont gérés en arborescence physique de différents niveaux conformément au procédé de gestion connu;
- la figure 2 est un schéma illustrant une mémoire dans laquelle les fichiers sont gérés en arborescence fictive conformément au procédé de gestion de fichiers selon l'invention.

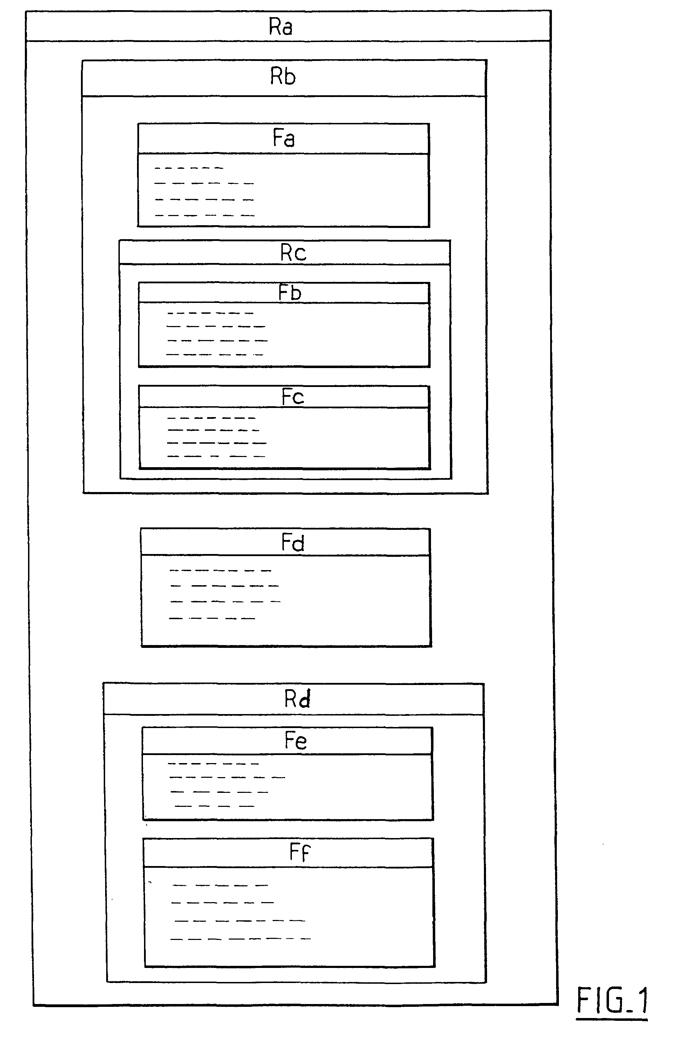

La figure 1 illustre une mémoire de carte à circuit intégré dans laquelle les fichiers sont gérés selon le procédé connu à arborescence physique. Des fichiers Fa à Ff sont physiquement stockés dans des répertoires Ra à Rd agencés dans la mémoire selon l'arborescence fixée par l'utilisateur.

En l'espèce, le répertoire Ra, qui est le répertoire racine de niveau 0 contient les répertoires Rb et Rd ainsi que le fichier Fd. Les répertoires Rb et Rd et le fichier Fd sont donc de niveau 1.

Le répertoire Rb contient le fichier Fa et le répertoire Rc, tout deux de niveau 2. Le répertoire Rc contient lui-même les fichiers Fb et Fc, tout deux de niveau 3.

Le répertoire Rd contient les fichiers Fe et Ff, tout deux de niveau 2.

On comprend que le schéma de la figure 1 illustre la disposition physique des fichiers et des répertoires qui les contiennent dans la mémoire de la carte à circuit intégré.

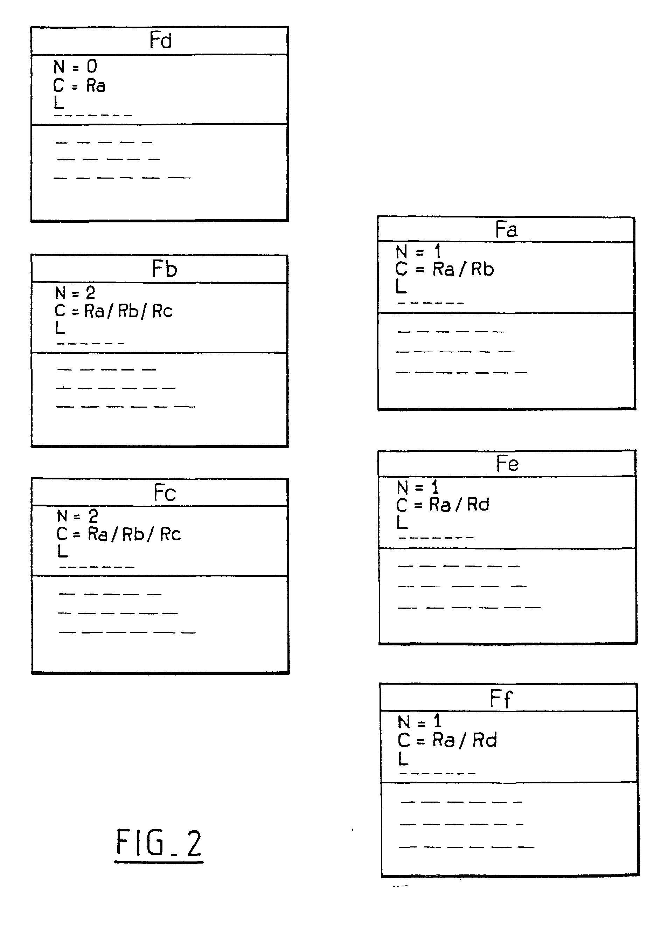

La figure 2 illustre une mémoire de carte à circuit intégré dans laquelle les fichiers sont gérés conformément à l'invention. Pour une meilleure compréhension, on a repris les fichiers Fa à Ff de la figure 1 classés fictivement selon la même arborescence, chaque fichier conservant son chemin d'accès.

Contrairement à la gestion connue de la figure 1, la gestion selon l'invention consiste à stocker physiquement chaque fichier dans la mémoire de la carte à circuit intégré de façon indépendante de son emplacement dans l'arborescence (qui n'est donc plus que fictive) et, partant, à supprimer tout répertoire physique. Le classement fictif des fichiers conformément à l'arborescence créée par l'utilisateur est réalisé en indiquant dans chaque fichier sont chemin d'accès C dans l'arborescence fictive. Ainsi, à partir de l'indication du nom d'un fichier et de son chemin d'accès, le système d'exploitation parcours la mémoire en explorant les en-têtes des fichiers jusqu'à ce qu'il trouve le fichier ayant le nom et le chemin d'accès spécifiés. L'arborescence peut être recalculée dynamiquement chaque fois que cela est nécessaire : le système d'exploitation explore les en-têtes de tous les fichiers et, à partir du chemin d'accès relevé pour chaque fichier, reconstitue l'arborescence de classement des fichiers dans la mémoire.

L'en-tête de chaque fichier comporte, outre son nom et son chemin d'accès dans l'arborescence, des indications complémentaires telles la longueur du fichier, le type de fichier, les conditions d'accès, etc.. L'en-tête comporte également ici l'indication notée N, du niveau du fichier dans l'arborescence. Cette indication permet au système d'exploitation, lors de la recherche d'un fichier ou du calcul dynamique de l'arborescence, de connaître directement le niveau du fichier dans l'arborescence sans avoir à inspecter son chemin d'accès. Les opérations sont ainsi d'une part facilitées et accélérées et d'autre part fiabilisées du fait de la redondance d'informations qui permet de détecter une éventuelle erreur d'écriture ou de lecture.

L'ordre de stockage des fichiers dans la mémoire est indifférent ainsi que cela ressort de la position des blocs illustrée par la figure 2 où le fichier Fd est disposé en tête de la mémoire tandis que le fichier Fa est disposé en quatrième position. Ainsi, lorsqu'un fichier doit être ajouté, il suffit de stocker celui-ci à la suite des fichiers déjà en place, sans avoir à effectuer de transfert de ces derniers.

Dans le cas d'une extension de fichier, il suffit de pousser bloc par bloc les fichiers situés derrière le fichier à étendre, puis de modifier l'indicateur de longueur de ce fichier ou plus simplement de déplacer le fichier dans un bloc ayant un espace suffisant. L'opération inverse est effectuée dans le cas d'une restriction ou d'une suppression de fichier.

On voit donc que, conformément à l'invention, les fichiers ne sont plus physiquement stockés sous forme arborescente, mais sous forme quelconque les uns à la suite des autres. L'arborescence peut être reconstituée fictivement a posteriori. De même, les répertoires n'ont pas d'existence physique dans la mémoire, mais existent fictivement du simple fait de leur mention dans les chemins d'accès de différents fichiers. Il en résulte en particulier que la destruction d'un répertoire s'effectue en détruisant tous les fichiers comportant ce répertoire dans leur chemin d'accès.

En l'espèce le fichier Fa qui, dans l'arborescence fictive, est situé dans le répertoire Rb, contient dans son en-tête l'indication N = 1 de son niveau dans l'arborescence fictive et l'indication C = Ra/Rb de son chemin d'accès, signifiant que le fichier Fa se trouve (fictivement) dans le répertoire (fictif) Rb qui lui même se trouve dans le répertoire (fictif) Ra. L'en-tête du fichier Fa contient également d'autres informations telle que sa longueur L.

Les autres fichiers contiennent dans leur en-tête des informations analogues. Ainsi, les fichiers Fb et Fc, qui sont fictivement situés dans le même répertoire Rc, ont le même niveau N=2 et le même chemin d'accès C=Ra/Rb/Rc. Le fichier Fd, qui est (fictivement) situé dans le répertoire racine Ra, est de niveau N = 0 et a pour chemin d'accès C=Ra. Les fichiers Fe et Ff, qui sont tous deux (fictivement) situés dans le répertoire Rd, ont le même niveau N = 1 et le même chemin d'accès C=Ra/Rd.

L'invention n'est pas limitée au mode de réalisation qui vient d'être décrit, mais en englobe au contraire toute variante reprenant, avec des moyens équivalant, les caractéristiques essentielles de l'invention.

## Revendications

1. Carte à circuit intégré comportant une mémoire contenant des fichiers classés selon une arborescence de différents niveaux, chaque fichier ayant un chemin d'accès associé, **caractérisée par le fait que** chaque fichier est physiquement implanté dans la mémoire de façon indépendante de son emplacement dans l'arborescence fictive et contient une indication du chemin d'accès complet associé à ce fichier.

2. Carte à circuit intégré selon la revendication 1, **caractérisée par le fait que** chaque fichier contient une indication du niveau de son emplacement dans l'arborescence.

## Patentansprüche

1. Karte mit integriertem Schaltkreis, umfassend einen Speicher, der Dateien enthält, die gemäß einer Baumstruktur mit unterschiedlichen Ebenen abgelegt sind, wobei jede Datei einen zugehörigen Zugriffspfad hat, **dadurch gekennzeichnet, daß** jede Datei unabhängig von ihrer Anordnung in der fiktiven Baumstruktur physisch in den Speicher implantiert ist und eine Angabe des vollständigen Zugriffspfades enthält, der dieser Datei zugeordnet ist.

2. Karte mit integriertem Schaltkreis nach Anspruch 1, **dadurch gekennzeichnet, daß** jede Datei eine Angabe der Ebene ihrer Anordnung in der Baumstruktur enthält.

## Claims

1. An IC card including a memory containing files classified in a tree structure of various levels, each file having an associated access path, the card being **characterized by** the fact that each file is physically located in the memory independently of its location in the virtual tree structure, and contains information specifying the full access path associated with the file.

2. An IC card according to claim 1, **characterized by** the fact that each file contains information specifying the level of its location in the tree structure.
